**Europäisches Patentamt**

**European Patent Office**

**Office européen des brevets**

(19)

(11) Publication number: **0 057 090**
**B1**

(12)    **EUROPEAN PATENT SPECIFICATION**

(45)    Date of publication of the patent specification:
01.08.84

(51)   Int. Cl.³: **C 01 B 31/08**

(21)    Application number: **82300314.0**

(22)    Date of filing: **21.01.82**

(54)    **Process for the production of carbon monoxide.**

(30)    Priority: **22.01.81  JP 8347/81**

(43)    Date of publication of application:
**04.08.82 Bulletin 82/31**

(45)    Publication of the grant of the patent:
**01.08.84 Bulletin 84/31**

(84)    Designated Contracting States:
**DE FR GB NL**

(56)    References cited:
**GB - A - 2 058 733**
**US - A - 3 716 619**
**US - A - 3 812 210**

(73)    Proprietor: **MITSUBISHI GAS CHEMICAL COMPANY, INC., 5-2, Marunouchi 2-chome Chiyoda-Ku, Tokyo (JP)**

(72)    Inventor: **Sano, Kozo, 36-13, Koganecho, Niigata-shi Niigata (JP)**
Inventor: **Yamamoto, Yasuo, 4-15, Kodo 2 chome, Niigata-shi Niigata (JP)**
Inventor: **Horie, Shigeru, 27, Koganecho, Niigata-shi Niigata (JP)**

(74)    Representative: **Pendlebury, Anthony et al, Page, White & Farrer 5 Plough Place New Fetter Lane, London EC4A 1HY (GB)**

## Description

This invention relates to a process for the production of carbon monoxide of high purity by pyrolysis of methyl formate.

High-purity carbon monoxide is an important material as a principal raw material for $C_1$ chemistry or a raw material for carbonylation. Usually, such carbon monoxide is separated from a mixture comprising carbon monoxide, hydrogen, methane, carbon dioxide and the like, and the carbon monoxide thus separated is compressed to a required pressure, the compressed carbon monoxide then being used for various applications.

When the carbon monoxide is prepared by using a process in which methyl formate is pyrolytically decomposed by the use of an alkali metal compound as the catalyst, carbon monoxide of high purity and at high pressure can be obtained without such separation and compression of gas. Such a process is therefore very desirable from an industrial viewpoint.

Methyl formate is usually produced by reacting methanol with carbon monoxide ($CH_3OH + CO \rightarrow HCOOCH_3$), by esterifying formic acid with methanol ($HCOOH + CH_3OH \rightarrow HCOOCH_3 + H_2O$), or by dehydrogenating methanol ($2CH_3OH \rightarrow HCOOCH_3 + 2H_2$). The reaction products obtained by these processes ordinarily contain a large amount of unreacted methanol and a minor amount of other by-products. We have previously discovered a catalyst which selectively decomposes only the methyl formate in a methyl formate solution containing such unreacted methanol and other by-products, thereby to give methanol and the desired carbon monoxide. This process is described in Japanese Patent Application No. 104621/79; according to this process, the methyl formate in the methyl formate solution can be decomposed without isolating the methyl formate or without separating and removing methanol therefrom. As a result this process is very advantageous and can provide, if desired, carbon monoxide under high pressure.

However, during further research work aiming to further improve the process for producing carbon monoxide by decomposing methyl formate, we have found that in the presence of a large amount of methanol in the methyl formate solution, there is a drawback that the activity of the catalyst is considerably reduced and the loss in the amount of carbon monoxide produced is increased.

Accordingly, it is an aim of the present invention to overcome the said drawback and to provide a process for the production of carbon monoxyde by means of which carbon monoxyde of high purity can be easily and effectively obtained, and in which the activity of the catalyst is maintained over a long period of time.

We have now found that the said drawback is overcome if methanol is removed from the said methyl formate solution to reduce the amount of methanol in the solution and to increase the amount of methyl formate in the solution to a concentration higher than 70 wt. %. As a result the amount of by-product hydrogen is not sufficient to significantly interfere with the reaction using carbon monoxide.

Accordingly, the present invention provides a process for the production of carbon monoxide in which a mixture comprising methyl formate and methanol is heated in the presence of an alkali metal catalyst other than an alkali metal alcoholate, whereby the methyl formate in the aforesaid mixture of methyl formate and methanol is pyrolytically decomposed to produce carbon monoxide, characterised in that the concentration of methyl formate in the said mixture is higher than 70 wt. %.

There is no particular limitation in the process by which methyl formate is produced. Examples of suitable ways of producing methyl formate are (i) by reacting methanol with carbon monoxide, (ii) by esterifying formic acid with methanol and (iii) by dehydrogenating methanol. Process (iii) is preferred because the quantity of heat required for separating the methyl formate or methanol from the resultant reaction product can be obtained from the heat produced in the synthesis of methyl formate. Furthermore, a continuous process combined with a reaction (iii) for synthesising methyl formate is advantageous because both hydrogen of high purity and carbon monoxide of high purity can be obtained as separate ingredients, and the ingredients under high pressure, if desired, can be obtained from methanol alone as the raw material.

When the methyl formate contains a large amount of methanol, methanol is removed from the mixture by means of, for example, distillation to concentrate the methyl formate in the solution until it is higher than 70 wt. %. When the concentration of methyl formate in the product of the methyl formate synthesis is higher than 70 wt. % at the outset, such product may be utilised without no treatment, as a matter of course. If the methyl formate solution contains a large amount of methanol, and a solution having a concentration of 70 wt. % or less of methyl formate is employed, the life of the catalyst decreases and the amount of carbon monoxide produced also decreases.

However, if the concentration of methyl formate in the methyl formate solution is too high, the number of plates and the reflux ratio of a distillation column to be used become considerably large, so that the rectification load increases excessively. It is therefore preferable to use a concentratiion of methyl formate in the methyl formate solution which is higher than 70 up to 95 wt. %.

The catalyst employed in the present invention may be an alkali metal compound other than an alkali metal alcoholate and which has no or little reactivity with methanol or methyl formate. Illustrative of such catalysts are, for example, hydroxides, sulfides, halides, inorganic acid salts such as sulfates and carbonates of alkali metals such as potassium, sodium, lithium and cesium, as well as organic acid salts of these alkali metals such as alkali metal formates and acetates. Among these compounds the most preferable are carbonates. Examples of the typical compounds include potassium hydroxide, potassium chloride, potassium formate, sodium sulfide, sodium sulfate, potassium carbonate, sodium carbonate, and lithium chloride. It is to be recognised that any of the foregoing alkali metal compounds can either be used separately or as mixtures.

Alkali metal alcoholates react with methyl formate at a reaction temperature of 35-200°C and are easily converted into other compounds, so that the quantity of carbon monoxide produced from methyl formate decreases in such cases, and the carbon monoxide is contaminated with dimethyl ether produced at that time. Therefore, alkali metal alcoholates cannot be utilised as catalysts in the process of the present invention.

The reaction may be carried out batch-wise or in continuous manner. Generally, in the batch-wise process, the catalyst is used in such a form that the alkali metal compound itself is dissolved homogeneously in the starting mixture, or slurried therewith when the compound is slightly soluble in the starting mixture, and the resultant mixture is charged into a suitable reaction chamber. In the continuous process, the starting mixture is continuously fed to a reactor as is the catalyst and the reaction product is continuously withdrawn therefrom. With a continuous method, a continuous fixed bed method may be used in which the alkali metal compound catalyst itself or a catalyst prepared by supporting the alkali metal compound on a neutral or basic carrier such as silica gel, diatomaceous earth, pumice, brick or activated carbon is previously charged into a reactor, and the starting mixture only is continuously supplied to the reactor while drawing out the reaction product continuously therefrom. The most preferable method from a practical point of view is a continuous fixed bed method.

The amount of catalyst employed in the present invention varies in accordance with which catalyst is used. For instance, in the continuous fixed bed method, no particular limitation exists on the amount of the catalyst. However, in those cases where the catalyst is mixed with the starting mixture or where the catalyst is not mixed with the starting mixture, but is added to a reactor independently and the reaction is carried out in a batch-wise or continuous manner, the amount of the catalyst is preferably 0.1-400 milliatoms, more preferably 0.4-100 milliatoms of alkali metal per mole of methyl formate. If the amount of the catalyst is less than 0.1 milliatom of alkali metal per mole of methyl formate, the rate of reaction will be too slow. On the other hand, if the amount exceeds 400 milliatoms, there is a danger of side decomposition reactions of methanol or methyl formate.

There is no particular limitation in the amount of alkali metal compound supported on the aforesaid carriers in a solid catalyst, but in practice the amount of the alkali metal compound is 0.05-3 milliatoms, preferably 0.1-1.5 milliatoms, alkali metal per gram of the carrier.

In practice the reaction temperature is usually from 200 to 500°C, preferably from 250 to 450°C. The velocity of decomposition of methyl formate is insufficient at a reaction temperature lower than 200°C, while the amount of methyl formate consumed by side reactions increases at a reaction temperature of more than 500°C, and also decomposition of methanol takes place giving a decrease in the yield of carbon monoxide, which becomes contaminated with the resultant by-products.

There is no particular limitation in the period of reaction time, but in practice it is preferable that the reaction time is from 500 to 50,000 (normal state) h$^{-1}$ in terms of the gas space velocity per hour (hereinafter referred to simply as GSVH) or from 1.3 to 130 h$^{-1}$ in terms of the liquid space velocity per hour (hereinafter referred to simply as LSVH).

There is also no particular limitation in the reaction pressure, but the reaction is generally carried out at a pressure ranging from normal pressure to 350 kg/cm² G.

According to the process of the present invention carbon monoxide of high purity can easily and effectively be obtained under high pressure, if required, and the activity of the catalyst used to generate carbon monoxide from methyl formate can be maintained for a long period of time.

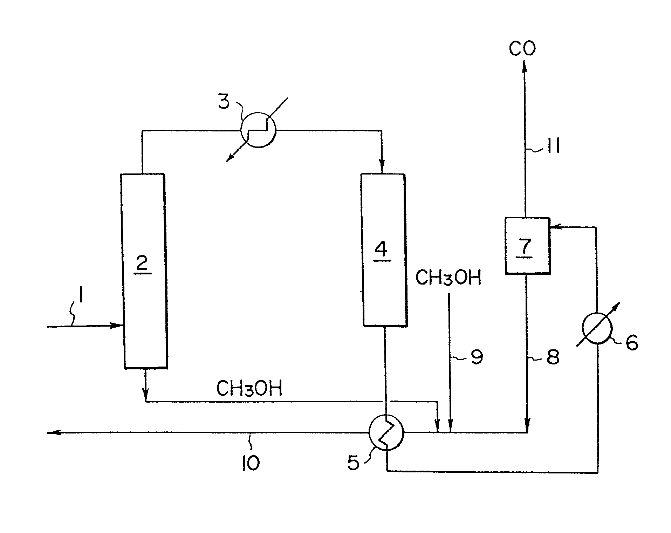

The present invention will now be described, by way of example only, with reference to the sole figure of the accompanying drawing, which is a flow sheet of an embodiment of the process of the present invention.

Methyl formate is synthesised from methanol and the resultant reaction product is introduced through supply line 1 into a distillation column 2. The solution is distilled in distillation column 2, and as a consequence, methanol is discharged from the bottom of the column 2, while a methyl formate solution comprising methyl formate in a concentration higher than 70 wt. % and methanol is taken out from the top of the column 2.

The methyl formate solution thus taken out is passed through a heat exchanger 3, the solution is then passed to a decomposition reactor 4 containing a packed solid catalyst in accordance with the invention, and the methyl formate is decomposed in the reactor 4. The resultant decomposed reaction product is cooled by means of a heat exchanger 5 and cooler 6, and the cooled decomposed reaction product is separated into carbon monoxide gas and liquid methanol in a vapor-liquid separator 7. The resulting methanol is supplied through a line 8 together with fresh methanol delivered through a line 9 as well as the methanol discharged from the bottom of the distillation column 2 to a reactor for synthesising methyl formate (not shown) through the heat exchanger 5 and a line 10. The carbon monoxide obtained in the vapor-liquid separator 7 is recovered through a line 11.

The present invention will now be described further in the following examples.

*Example 1:*

Methyl formate is prepared from methanol to give a methyl formate product containing 28 wt. % of methyl formate. Referring to the drawing, this product was supplied to a distillation column 2 in which the number of theoretical plates was 15, and distillation was effected at a reflux ratio of 3. As a result, a methyl formate solution consisting of 85 wt. % of methyl formate and 15 wt. % of methanol was obtained from the top of column 2.

Then, the methyl formate solution was fed to decomposition reactor 4 under conditions involving a reaction pressure of 9.5 kg/cm² G, a GSVH of 2,000 h⁻¹ on the basis of methyl formate, and a reaction temperature of 290°C , and the methyl formate was decomposed. As a catalyst, 10 wt. % of potassium hydroxide supported on activated carbon was employed. The flow for treating the decomposed reaction product is as illustrated in the accompanying drawing.

As a result of effecting the above-mentioned reaction in decomposition reactor 4 for 100 d, the rate of conversion of methyl formate at the beginning of the process and after 100 d from the start of the process was from 98 to 99%, and the purity of carbon monoxide obtained each time was from 97 to 98%, so that there was substantially no decrease in efficiency with time.

*Comparative Example 1*

Methyl formate was produced from methanol to give a product containing methyl formate and methanol in which the concentration of methyl formate is 30 wt. %. This product was supplied to the reactor at a rate of GSVH of 2,000 h⁻¹ on the basis of methyl formate was 99% at the time of starting the reaction, this decreased to 90% after 15 d from the time of starting the reaction and to 80% after an additional 30 d. Thus, it became necessary to further raise the reaction temperature in order to increase the rate of conversion to carbon monoxide.

It is to be noted that the purity of the carbon monoxide produced in this example was about 99%.

*Example 2:*

Methyl formate was prepared from methanol to give a reaction product containing 28 wt. % methyl formate. This product was supplied to a distillation column 2 in which the number of theoretical plates was 15, and distillation was effected at a reflux ratio of 4. As a result, a methyl formate solution consisting of 90 wt. % of methyl formate and 10 wt. % of methanol was obtained at the top of column 2.

Then, the methyl formate solution was treated under conditions involving a reaction pressure of 100 kg/cm² G, a GSVH of 1,800 h⁻¹ on the basis of methyl formate, and a reaction temperature of 295°C so as to pyrolytically decompose methyl formate. As a catalyst, 10 wt. % of potassium carbonate supported on brick was employed. After the reaction, the resulting reaction product was subjected to vapor-liquid separation to obtain 17 l (normal condition) of carbon monoxide (98% purity) per hour under a pressure of 100 kg/cm² G. This carbon monoxide corresponds to 96% of the total theoretical yield of carbon monoxide.

*Comparative Example 2*

Pyrolytical decomposition was carried out in the same manner as Example 2 except that a methyl formate solution having a concentration of methyl formate of 30 wt. % was used as the raw material. After the reaction, the resulting reaction product was subjected to vapor-liquid separation to obtain 14.8 l (normal condition) of carbon monoxide (88% purity) per hour under a pressure of 100 kg/cm² G. This carbon monoxide corresponds to 83% of the total theoretical yield of carbon monoxide.

**Claims:**

1. A process for the production of carbon monoxide in which a mixture comprising methyl formate and methanol is heated in the presence of an alkali metal catalyst other than an alkali metal alcoholate, whereby the methyl formate in said mixture of methyl formate and methanol is pyrolytically decomposed to produce carbon monoxide, characterised in that the concentration of methyl formate in the said mixture is higher than 70 wt. %.

2. A process according to Claim 1, characterised in that the alkali metal catalyst is a compound of at least one of potassium, sodium, lithium and cesium.

3. A process according to Claim 1 or 2, characterised in that the alkali metal catalyst is one or more of a hydroxide, sulfide, halide or an inorganic acid salt or organic acid salt of said alkali metals.

4. A process according to Claim 1, 2 or 3, characterised in that the process is performed continuously.

5. A process according to any one of the preceding claims, characterised in that the alkali metal compound is used in an amount of 0.1-400 milliatoms of alkali metal per mole of methyl formate.

6. A process according to any one of the preceding claims, characterised in that the alkali metal catalyst is supported on a carrier.

7. A process according to Claim 6, characterised in that the carrier is a neutral to basic carrier.

8. A process according to Claim 6 or 7, characterised in that the catalyst is charged as a fixed bed into a reactor.

9. A process according to Claim 6, 7 or 8, characterised in that the amount of the catalyst is from 0.05 to 3.0 milliatoms of alkali metal per gram of the carrier.

10. A process according to any one of the preceding claims, characterised in that the reaction temperature is 200 to 500°C .

**Patentansprüche:**

1. Verfahren zur Herstellung von Kohlenmonoxyd, wobei eine Mischung, die aus Methylformiat und Methanol besteht, in Gegenwart eines von einem Alkalimetall-Alkoholat verschiedenen Alkalimetall-Katalysators erhitzt wird, wodurch das in der Mischung aus Methylformiat und Methanol vorhandene Methylformiat pyrolytisch zersetzt wird, so dass Kohlenmonoxyd entsteht, dadurch gekennzeichnet, dass die Konzentration des Methylformiats in der Mischung höher ist als 70 Gew.-%.

2. Verfahren nach Anspruch 1, dadurch gekennzeichnet, dass der Alkalimetall-Katalysator eine Verbindung von wenigstens einer der Substanzen Kalium, Natrium, Lithium und Cäsium ist.

3. Verfahren nach einem der Ansprüche 1 oder 2, dadurch gekennzeichnet, dass der Alkalimetall-Katalysator aus einer oder mehreren der Substanzen besteht, die ein Hydroxyd, Sulfid, Halogenid oder Salz einer anorganischen Säure oder ein Salz einer organischen Säure der genannten Alkalimetalle umfassen.

4. Verfahren nach einem der Ansprüche 1, 2 oder 3, dadurch gekennzeichnet, dass das Verfahren kontinuierlich durchgeführt wird.

5. Verfahren nach einem der vorangehenden Ansprüche, dadurch gekennzeichnet, dass die Alkalimetall-Verbindung in einer Menge von 0,1 bis 400 Milliatome des Alkalimetalls je Mol des Methylformiats verwendet wird.

6. Verfahren nach einem der vorangehenden Ansprüche, dadurch gekennzeichnet, dass der Alkalimetall-Katalysator von einer Trägersubstanz getragen wird.

7. Verfahren nach Anspruch 6, dadurch gekennzeichnet, dass die Trägersubstanz eine neutrale bis basische Trägersubstanz ist.

8. Verfahren nach einem der Ansprüche 6 oder 7, dadurch gekennzeichnet, dass der katalysator als Festbett in einem Reaktor eingegeben wird.

9. Verfahren nach einem der Ansprüche 6, 7 oder 8, dadurch gekennzeichnet, dass die Menge des Katalysators zwischen 0,05 und 3,0 Milliatome des Alkalimetalls je Gramm der Trägersubstanz beträgt.

10. Verfahren nach einem der vorangehenden Ansprüche, dadurch gekennzeichnet, dass die Reaktionstemperatur 200 bis 500°C beträgt.

## Revendications:

1. Un procédé pour la production de monoxyde de carbone, dans lequel un mélange constitué de formiate de méthyle et de méthanol est chauffé en présence d'un catalyseur à métal alcalin autre qu'un alcoolate de métal alcalin, de sorte que le formiate de méthyle dans ledit mélange de formiate de méthyle et de méthanol se trouve décomposé par pyrolyse pour produire du monoxyde de carbone, caractérisé en ce que la concentration du formiate de méthyle dans ledit mélange est supérieure à 70% en poids.

2. Un procédé selon la revendication 1, caractérisé en ce que le catalyseur à métal alcalin est un composé comportant au moins un élément du groupe potassium, sodium, lithium et césium.

3. Un procédé selon l'une des revendications 1 ou 2, caractérisé en ce que le catalyseur à métal alcalin est un ou plusieurs d'un hydroxyde, sulfure, halogénure ou sel d'acide minéral ou sel d'acide organique desdits métaux alcalins.

4. Un procédé selon l'une des revendications 1, 2 ou 3, caractérisé en ce que le procédé est réalisé en continu.

5. Un procédé selon l'une quelconque des revendications précédentes, caractérisé en ce que le composé à métal alcalin est utilisé à raison de 0,1-400 milliatomes de métal alcalin par mole de formiate de méthyle.

6. Un procédé selon l'une quelconque des revendications précédentes, caractérisé en ce que le catalyseur à métal alcalin est fixé à un support.

7. Un procédé selon la revendication 6, caractérisé en ce que le support est un support neutre à basique.

8. Un procédé selon l'une des revendications 6 ou 7, caractérisé en ce que le catalyseur est chargé sous la forme d'un lit fixe dans un réacteur.

9. Un procédé selon l'une des revendications 6, 7 ou 8, caractérisé en ce que la quantité de catalyseur est de 0,05 à 3,0 milliatomes de métal alcalin par gramme du support.

10. Un procédé selon l'une quelconque des revendications précédentes, caractérisé en ce que la température de réaction est de 200 à 500°C.